# EUROPÄISCHE PATENTSCHRIFT

(11) **EP 1 856 705 B1**
(45) Veröffentlichungstag und Bekanntmachung des Hinweises auf die Patenterteilung: **15.04.2009**
(21) Anmeldenummer: 06707153.0
(22) Anmeldetag: 22.02.2006
(51) Int. Cl.: H01F 38/18, B23Q 1/00, H01F 27/28, H01F 27/36

(54) **DREHÜBERTRAGER**
ROTATIONAL TRANSMITTER
SYSTEME DE TRANSMISSION DE ROTATION

(30) Priorität: 09.03.2005 DE 102005011197
(43) Veröffentlichungstag der Anmeldung: 21.11.2007
(60) Teilanmeldung: 08156937.8
(73) Patentinhaber: KOMET GROUP Holding GmbH, 74354 Besigheim (DE)
(72) Erfinder: HÖRL, Roland, 74357 Bönnigheim (DE); GRAF, Heiko, 70839 Gerlingen (DE)
(74) Vertreter: Wolf, Eckhard
(86) Internationale Anmeldenummer: PCT/EP2006/001586
(87) Internationale Veröffentlichungsnummer: WO 2006/094630

(56) Entgegenhaltungen:
- EP-A- 0 926 690
- DE-A1- 3 724 349
- DE-A1- 10 200 488
- DE-A1- 19 538 528
- DE-A1- 19 649 682
- US-A- 3 758 845
- US-A- 4 837 556

## Beschreibung

Die Erfindung betrifft einen Drehübertrager mit einem Statorteil und einem Rotorteil, mit je einer statorseitigen und einer rotorseitigen, an einander zugewandten Enden über einen Luftspalt voneinander getrennten Kernpartie, mit je mindestens einer auf die statorseitige und die rotorseitige Kernpartie aufgewickelten Energiewicklung für die Energieübertragung nach dem Transformatorprinzip, und mit einander paarweise zugeordneten, stator- und rotorseitigen Kopplungswindungen für die induktive Datenübertragung, die an eine Sende- und/oder Empfangselektronik angeschlossen sind, wobei die Kopplungswindungen durch Teile der jeweiligen Kernpartie vom Bereich der Energiewicklung getrennt und von diesen abgeschirmt sind.

Drehübertrager dieser Art werden beispielsweise in Verstell-Werkzeugen mit externer Energieversorgung eingesetzt (DE 102 00 488 A1). Bei dem vorbekannten Drehübertrager bilden die Kopplungswindungen jeweils eine Spule mit mehreren Windungen, die in einen Ferritring bzw. in ein Ferritsegment eingebettet sind. Die radial und axial übereinander liegenden Kopplungswindungen führen zu einer radialen Ausdehnung, die für die Unterbringung mehrere Datenkanäle ungünstig ist und beim rotierenden Betrieb wegen der an den Windungen angreifenden Zentrifugalkräfte nachteilig ist.

Ausgehend hiervon liegt der Erfindung die Aufgabe zugrunde, den bekannten Drehübertrager der eingangs angegebenen Art dahingehend zu verbessern, dass bei Verwendung mehrerer Datenkanäle eine geringe radiale Ausdehnung des Übertragers vorliegt.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin,
a) dass die Kopplungswindungen unter Bildung je einer räumlich gekrümmten Schleife im zugehörigen Stator- und Rotorteil angeordnet sind,
b) dass die statorseitige Kopplungswindung einen rotomahen und mindestens einen rotorfernen Windungszweig aufweist, die über mindestens eine Umlenkschleife miteinander verbunden sind,
c) dass die rotorseitige Kopplungswindung einen statomahen Windungszweig und mindestens einen statorfemen Windungszweig aufweist, die über mindestens eine Umlenkschleife miteinander verbunden sind,
d) dass die Windungszweige der statorseitigen Kopplungswindung zusammen mit der zugehörigen Umlenkschleife eine teilzylindrische Fläche aufspannen,
e) dass die Windungszweige der rotorseitigen Kopplungswindung zusammen mit der zugehörigen Umlenkschleife eine zylindrische Fläche aufspannen,
f) dass die teilzylindrische Fläche der statorseitigen Kopplungswindung und die zylindrische Fläche der zugehörigen rotorseitigen Kopplungswindung mit etwa gleichen Zylinderradien koaxial zur Rotationsachse des Rotorteils in axialem Abstand voneinander angeordnet sind,
g) und dass der statomahe Windungszweig der rotorseitigen Kopplungswindung und der rotomahe Windungszweig der statorseitigen Kopplungswindung mit etwa gleicher Umfangskrümmung parallel zueinander und in axialem Abstand voneinander angeordnet sind.

Um einen Zugriff zu dem Rotor mit einem automatischen Handhabungssystem zu ermöglichen, ist es von Vorteil, wenn das Statorteil mit seiner Kempartie, der Energiewicklung und der mindestens einen Kopplungswindung sich nur über ein Zylindersegment erstreckt, während das Rotorteil mit seiner Kernpartie, der Energiewicklung und der mindestens einen Kopplungswindung sich über einen Vollzylinder erstrecken kann.

Grundsätzlich ist es aber auch möglich, dass die Windungszweige der statorseitigen und der rotorseitigen Kopplungswindungen zusammen mit den zugehörigen Umlenkschleifen zueinander spiegelsymmetrisch ausgebildete teilzylindrische Flächen aufspannen. Dementsprechend erstrecken sich dann das Statorteil und das Rotorteil mit ihrer Kempartie, der Energiewicklung und der mindestens einen Kopplungswindung nur über ein Zylindersegment. Solche Anwendungen sind vor allem bei gegeneinander verschwenkbaren Systemen von Interesse, die nach einem jeden Schwenkvorgang in ihre Ausgangsposition zurückgelangen und dort zeitweilig verharren. Andererseits ist es grundsätzlich möglich, dass die Windungszweige der statorseitigen und der rotorseitigen Kopplungswindungen zusammen mit den zugehörigen Umkehrschleifen zueinander spiegelsymmetrisch ausgebildete vollzylindrische Flächen aufspannen. Dementsprechend erstrecken sich in diesem Fall sowohl das Statorteil als auch das Rotorteil mit ihren Kempartien, Energiewicklungen und Kopplungswindungen über einen Vollzylinder. Diese Ausgestaltung findet vor allem dort Anwendung, wo der Rotor keiner häufigen Auswechslung bedarf.

Gemäß einer weiteren bevorzugten Ausgestaltung der Erfindung weist die Kernpartie des Rotorteils zwei in radialem Abstand voneinander zylindrisch umlaufende, einseitig durch ein radiales Joch unter Bildung eines statorseitig offenen, U-förmigen Querschnitts miteinander verbundene Kernschenkel auf, wobei die rotorseitige Energiewicklung im zylindrischen Zwischenbereich zwischen den Kernschenkeln umläuft und die mindestens eine rotorseitige Kopplungswindung radial außerhalb des inneren und/oder äußeren Kernschenkels umläuft. Andererseits weist die Kernpartie des segmentartigen Statorteils zweckmäßig zwei sich in radialem Abstand teilzylindrisch verlaufende, einseitig durch ein radiales Joch unter Bildung eines rotorseitig offenen U-förmigen Querschnitts miteinander verbundene Kemschenkel auf, während die statorseitige Energiewicklung im teilzylindrischen Zwischenbereich zwischen den Kernschenkeln angeordnet ist und die mindestens eine statorseitige Kopplungswindung radial außerhalb des inneren und/oder äußeren statorseitigen Kernschenkels angeordnet ist. Die statorseitigen und die rotorseitigen Anschlusskontakte der Energiewicklungen und/oder der Kopplungswindungen sind dort jeweils auf der Jochseite nach außen geführt. Die ferromagnetischen Kernpartien bestehen zweckmäßig aus einem ferritischen Material.

Eine besonders vorteilhafte bauliche Ausgestaltung der Erfindung sieht vor, dass die Kopplungswindungen als auf einen Flachmaterialträger aufgedruckte Leiterbahnen ausgebildet sind, wobei die Flachmaterialträger gegen die der Energiewicklung abgewandten, achsparallel ausgerichteten Außenseiten der Kemschenkel anliegen oder auf diese aufgeklebt sind.

Um einen definierten Bezugspunkt für die hochfrequente analoge Signalverarbeitung zu erhalten, ist es von Vorteil, wenn die Flachmaterialträger zusätzlich einen auf Massepotential liegenden, von der Kopplungswindung umschlossenen Leiterbereich aufweisen, der mit der zugehörigen Sende- und Empfangselektronik verbunden ist.

Zum Schutz der Kopplungswindungen und der Energiewicklungen sind zumindest die rotomahen Windungszweige der statorseitigen Kopplungswindungen und/oder Energiewicklungen mit einer dielektrischen Deckschicht versehen. Die Deckschicht kann dabei mit einer Kennfarbe eingefärbt sein, damit ein Verschleiß von außen an einer Farbänderung erkannt werden kann. Zweckmäßig weist die Deckschicht eine Wandstärke < 1 mm, vorzugsweise < 0,5 mm, auf. Wenn zusätzlich eine Vorrichtung zur Messung der elektrischen Leitfähigkeit der Deckschicht vorgesehen ist, kann diese Anordnung zur automatischen Überwachung des Verschleißzustandes benutzt werden. Vorteilhafterweise sind die Kopplungswindungen und/oder die Energiewicklungen in eine zugleich die Deckschicht bildende Gießmasse eingebettet. Die Gießmasse und/oder die Deckschicht enthält zweckmäßig ein abriebfestes Material, das beispielsweise aus beigemischten Keramikteilchen bestehen kann.

Gemäß einer weiteren vorteilhaften Ausgestaltung der Erfindung ist das Statorteil in einem Gehäuse angeordnet, das aus einem Grundgehäuse zur Aufnahme der Sende- und/oder Empfangselektronik mit Anschlusskabel sowie einem am Grundgehäuse lösbar angeordneten Wechselgehäuse zur Aufnahme der Energiewicklung und der Kopplungswindungen zusammengesetzt ist, wobei in dem Grundgehäuse und dem Wechselgehäuse Kontaktelemente einer Trennstelle zur Herstellung der elektrischen Verbindungen angeordnet sind.

Gemäß einer bevorzugten Ausgestaltung der Erfindung ist das Statorteil in einem Gehäuse angeordnet, das im Bereich der Energiewicklung und der Kopplungswindungen unter Bildung eines Gehäusefensters zur Rotorseite hin offen ist. Das Gehäusefenster ist zweckmäßig mit einem Deckel verschließbar, der über ein Handhabungssystem am Gehäuse fixiert werden kann.

Während im ersteren Falle das Wechselgehäuse bei Nichtgebrauch mit wenigen Handgriffen vollständig entfernt werden kann, bleibt das Statorgehäuse im letzteren Falle auch bei Nichtgebrauch in seiner Position und wird lediglich durch den einwechselbaren Deckel gegen Verschleiß geschützt.

### (Fortsetzung auf Seite 6 der ursprünglichen Unterlagen)

Im Folgenden wird die Erfindung anhand der in der Zeichnung in schematischer Weise dargestellten Ausführungsbeispiele näher erläutert. Es zeigen
- Fig. 1: eine Seitenansicht eines in eine Maschinenspindel eingespannten Werkzeugkopfs mit induktivem Drehübertrager für die Energie- und Datenübertragung in teilweise geschnittener Darstellung;
- Fig. 2a und 2b: eine Seitenansicht und eine Draufsicht eines an einen Spindelkasten einer Werkzeugmaschine montierten Statorteils des Drehübertragers nach Fig. 1 mit Wechselgehäuse;
- Fig. 3a bis 3d: eine Draufsicht und drei verschiedenen Schnittdarstellungen des Stators nach Fig. 2a und 2b;
- Fig. 4a und 4b: eine Darstellung entsprechend Fig. 2a und 2b mit auf die Statoröffnung aufgesetzter Deckelplatte;
- Fig. 4c und 4d: Darstellungen entsprechend Fig. 4a und 4b mit einem die Drehplatte tragenden Deckelhalter;

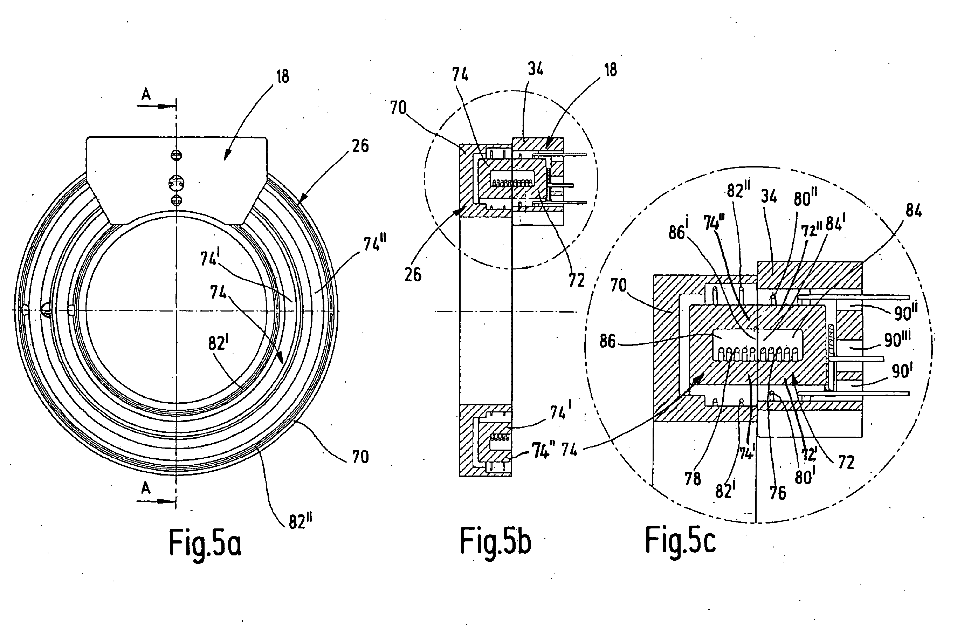

- Fig. 5a: eine Draufsicht auf den Drehübertrager von der Statorseite aus gesehen;
- Fig. 5b und 5c: einen Schnitt entlang der Schnittlinie A-A der Fig. 5a sowie einen vergrößerten Ausschnitt aus Fig. 5b;

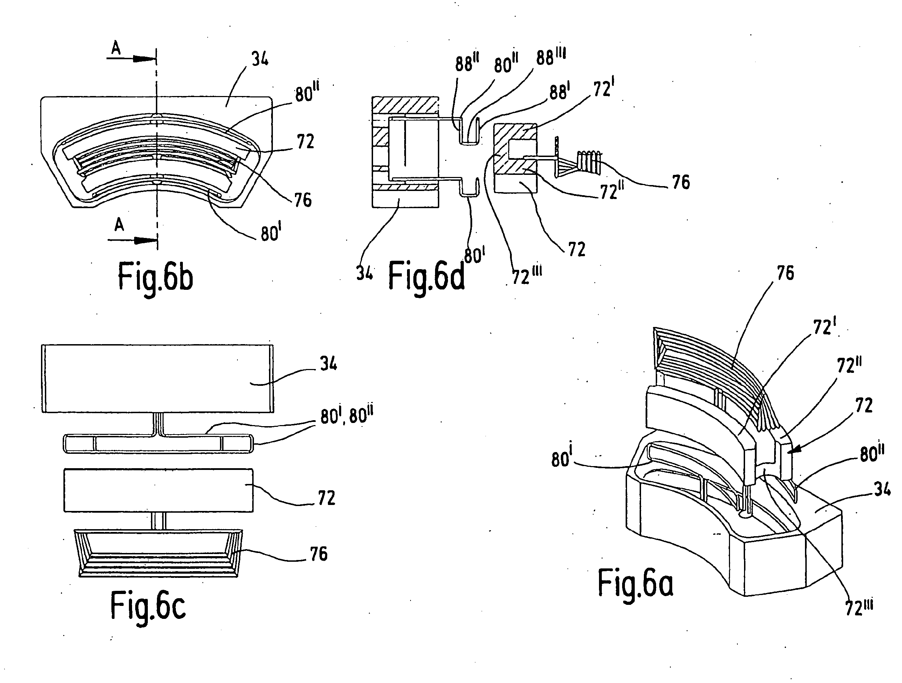

- Fig. 6a: eine schaubildliche Explosionsdarstellung des Statorteils des Drehübertragers;
- Fig. 6b bis 6d: zwei Seitenansichten und eine Schnittdarstellung des Statorteils nach Fig. 6a;

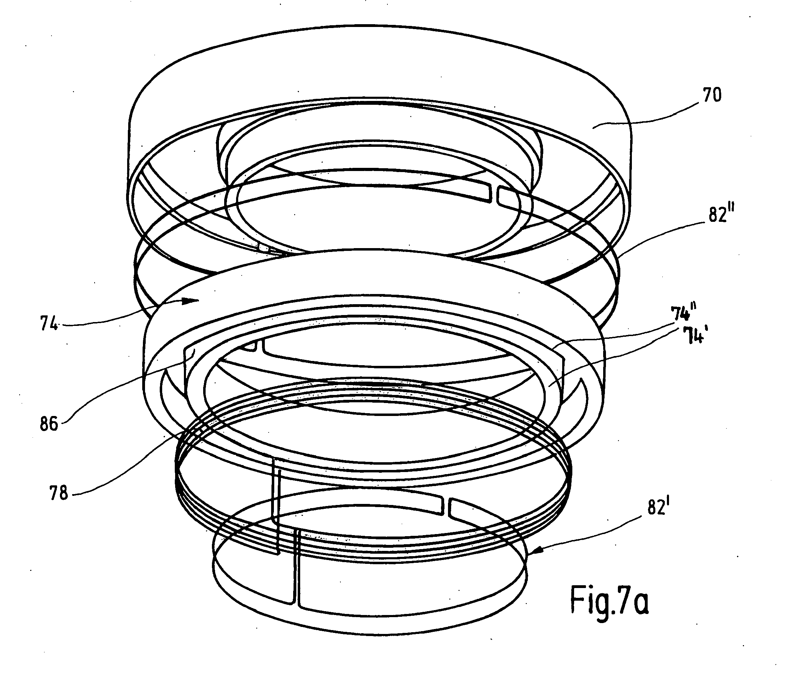

- Fig. 7a: eine schaubildliche Explosionsdarstellung des Rotorteils des Drehübertragers;

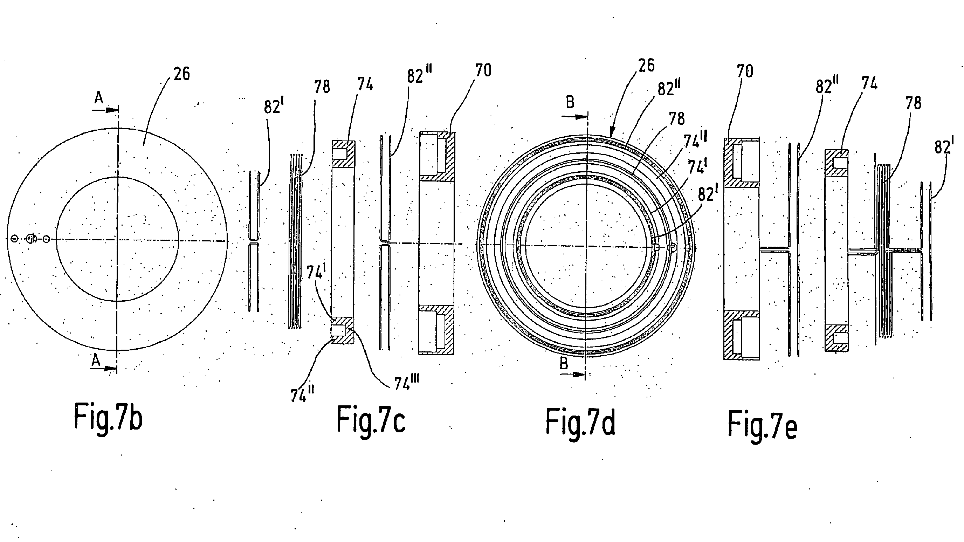

- Fig. 7b und 7c: eine Draufsicht auf die geschlossene Seite des Rotorteils sowie einen Schnitt entlang der Schnittlinie A-A der Fig. 7b;
- Fig. 7d und 7e: eine Draufsicht auf die offene Seite des Rotorteils sowie einen Schnitt entlang der Schnittlinie B-B der Fig. 7d;
- Fig. 8: eine schaubildliche Darstellung der statorseitigen und rotorseitigen Kopplungsschleifen des Drehübertragers;
- Fig. 9a: eine Darstellung des Drehübertragers entsprechend Fig. 5a mit zwei segmentartigen Statorteilen für die Energieübertragung und für die Datenübertragung;
- Fig. 9b und 9c: einen Schnitt entlang der Schnittlinie A-A der Fig. 9a sowie einen vergrößerten Ausschnitt aus Fig. 9b;
- Fig. 10a: ein abgewandeltes Ausführungsbeispiel eines Drehübertragers mit segmentartigem Stator und segmentartigem Rotor;
- Fig. 10b bis 10d: eine Draufsicht sowie zwei Schnittdarstellungen des Drehübertragers nach Fig. 10a;
- Fig. 11a bis 11d: eine Draufsicht und drei Schnittdarstellungen eines abgewandelten Ausführungsbeispiels eines Drehübertragers mit vollzylindrischem Stator- und Rotorteil.

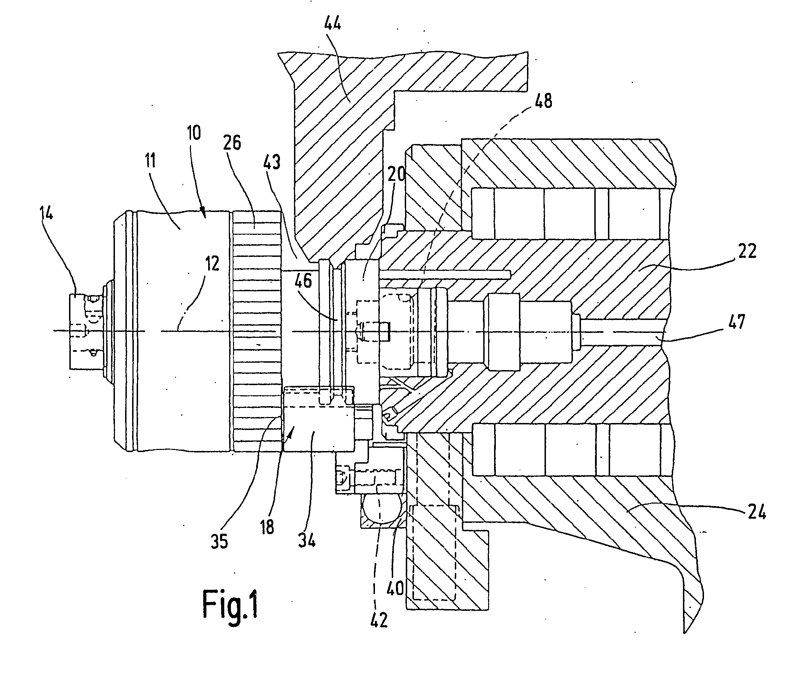

Der in Fig. 1 dargestellte, als Feindrehkopf ausgebildete Werkzeugkopf 10 besteht im wesentlichen aus einem Grundkörper 11, einem quer zur Drehachse 12 des Werkzeugkopfs 10 gegenüber dem Grundkörper 11 verstellbaren, eine Werkzeugaufnahme für einen ein Schneidwerkzeug tragenden Schieber 14, mindestens einem innerhalb des Werkzeugkopfs 10 angeordneten Stromverbraucher in Form einer Messeinrichtung zur direkten Verstellwegmessung sowie einem elektrischen Verstellmotor für den Schieber 14. Die Stromversorgung der Stromverbraucher und der Datenaustausch erfolgt über einen Drehübertrager, der aus einem Statorteil 18 und einem Rotorteil 26 besteht. Der Werkzeugkopf 10 ist mit einem axial über den Grundkörper 11 überstehenden Werkzeugschaft 20 mit der Maschinenspindel 22 und der Werkzeugmaschine 24 kuppelbar. Zur Einstellung eines Luftspalts 35 zwischen dem Stator- und dem Rotorteil ist das Statorgehäuse 34 an einem statorfesten Halter 40 mittels eines Verstellmechanismus 42 sowohl in seinem Abstand zum Rotor als auch in seiner Drehlage um eine zur Drehachse 12 parallele Achse verstellbar angeordnet.

Bei dem in Fig. 1 gezeigten Ausführungsbeispiel erstreckt sich das Statorteil 18 segmentartig nur über einen Teilumfang von etwa 70° des Werkzeugschafts 20 und lässt den überwiegenden Teil des Schaftumfangs unter Bildung eines Freiraums 43 für den Zugriff eines Werkzeuggreifers 44 für den automatischen Werkzeugwechsel frei. Beim Werkzeugwechsel wird der Werkzeugkopf 10 an der Greiferrille 46 vom Werkzeuggreifer 44 von der dem Statorteil gegenüberliegenden Seite her erfasst und bei gelöster Werkzeugkupplung axial gegenüber der Maschinenspindel 22 verschoben. Die Kupplung des Werkzeugkopfes 10 mit der Maschinenspindel 22 erfolgt über einen maschinenseitig über die Zugstange 47 betätigbaren Spannmechanismus, der von der Maschinenseite aus in den Hohlraum 48 des Werkzeugschafts 20 eingreift und den Werkzeugkopf unter Herstellung einer Planflächenverspannung und einer Radialverspannung mit der Maschinenspindel 22 kuppelt.

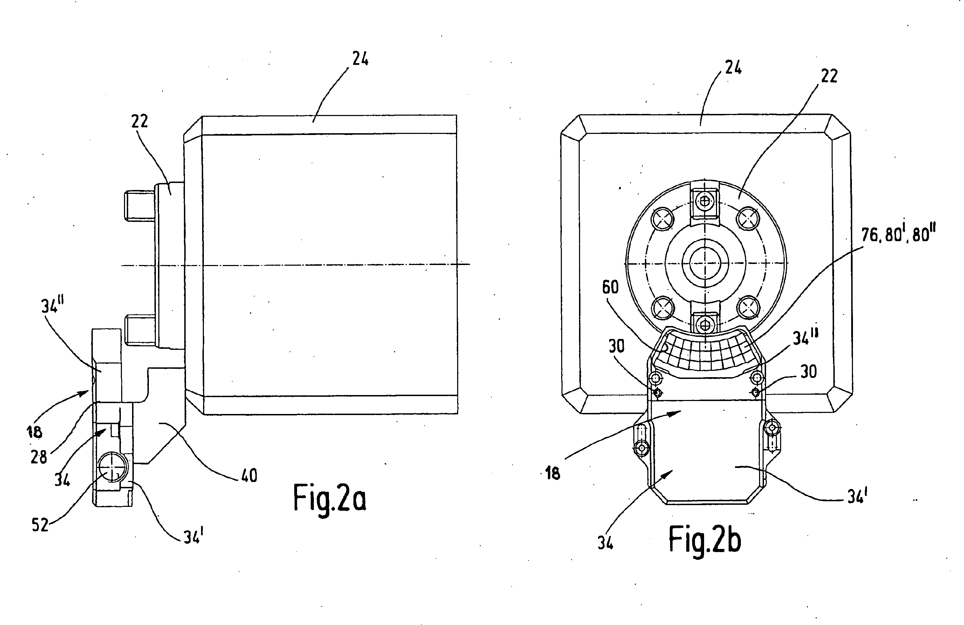

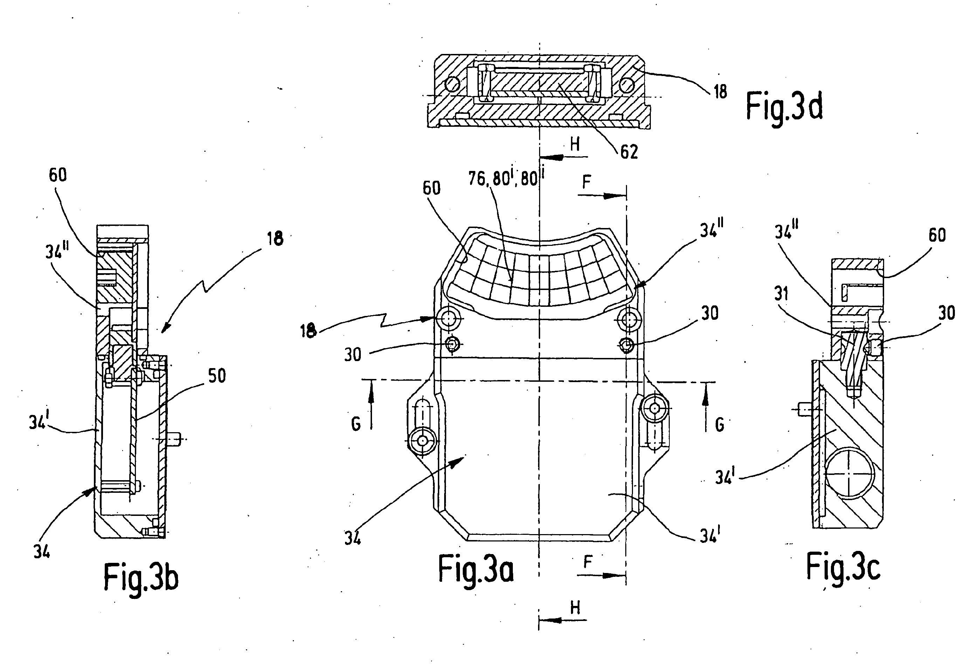

Bei dem in den Figuren 2a bis 4d gezeigten Ausführungsbeispiel weist das Statorteil 18 ein zweiteiliges Gehäuse 34, bestehend aus einem Grundgehäuse 34' und einem Wechselgehäuse 34", auf. Das Grundgehäuse 34' ist an dem statorfesten Halter 40 fixiert, während das Wechselgehäuse 34" an der Trennstelle 28 mittels zweier Spannschrauben 30 und einem Verbindungsbolzen 31 lösbar am Grundgehäuse 34' befestigt ist. Im Grundgehäuse 34' sind die Signalaufbereitungselektronik, die Sende- und Empfangselektronik sowie die Elektrik für die Energieversorgung auf einer Platine 50 angeordnet, die ein durch eine Öffnung 52 im Grundgehäuse 34' hindurchgreifendes Kabel mit der Maschinensteuerung verbunden ist. Im Wechselgehäuse 34" befinden sich eine Energiewicklung 76 für die Energieübertragung sowie zwei Kopplungswindungen 80',80" für die induktive Datenübertragung zum Rotorteil 26. Die Energiewicklung und die Kopplungswindungen sind in eine Gießmasse aus Kunstharz mit abriebfestem Zusatz, wie z. B. Keramikteilchen, eingebettet und befinden sich im Wechselgehäuse 34" hinter einem Gehäusefenster 60. Die Energiewicklung 76 und die Kopplungswindungen 80',80" sind über eine als Steckverbindung ausgebildete elektrische Trennstelle 62 mit der Signalaufbereitungselektronik auf der Platine 50 lösbar verbunden.

Die Energiewicklung 76 und die Kopplungswindungen 80',80" sind über das Gehäusefenster 60 einem Materialstrom bestehend aus Spänen und/oder Kühlmittel, ausgesetzt und unterliegen daher einem Verschleiß. Dies gilt vor allem beim Einsatz von Werkzeugen herkömmlicher Bauart, die kein das Statorteil 18 übergreifendes Rotorteil 26 aufweisen. Um die Statorwicklungen vor unnötigem Abrieb zu schützen, kann das Wechselgehäuse 34" durch Lösen der beiden Schrauben 30 mit einfachen Handgriffen entfernt werden, ohne dass das Grundgehäuse 34' abgenommen werden muß.

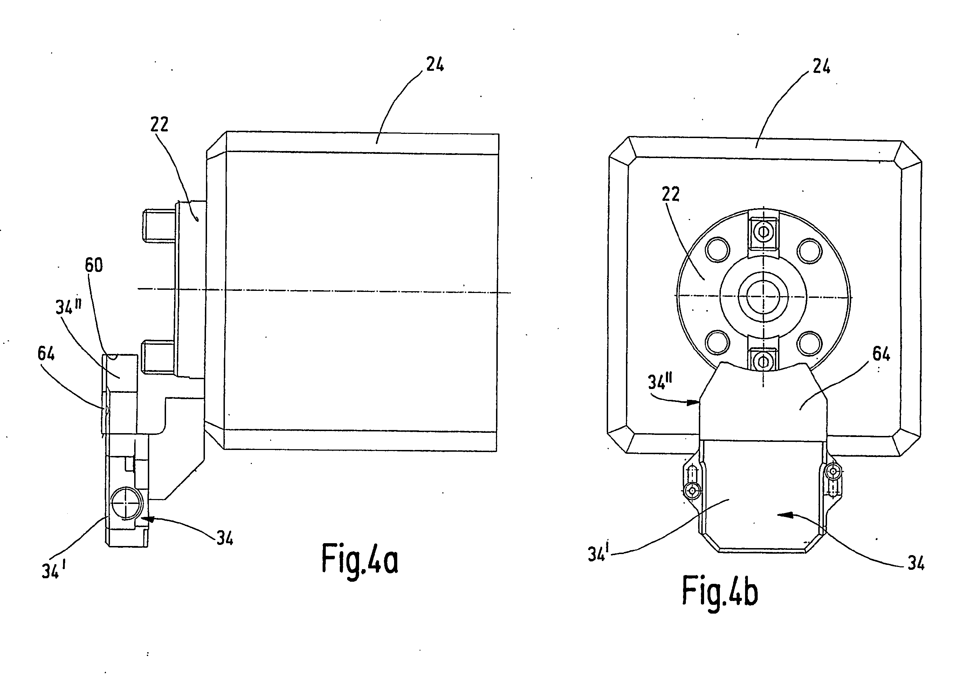

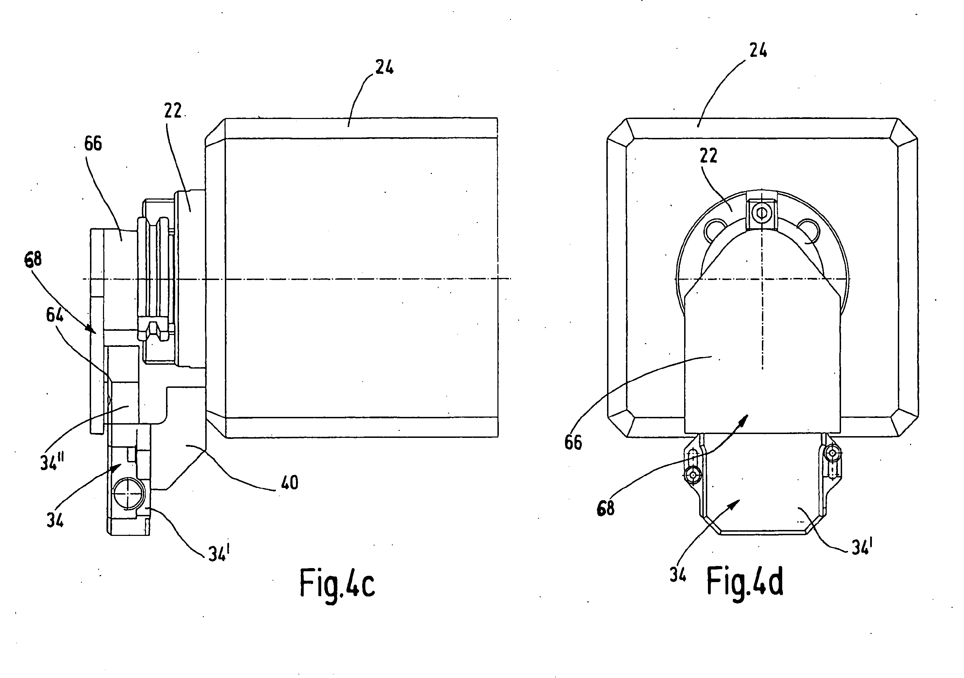

Eine weitere Möglichkeit für den Verschleißschutz besteht darin, dass das Gehäusefenster 60 bei Nichtgebrauch durch einen Deckel 64 verschlossen wird. Das Anbringen und Abnehmen des Deckels 64 kann mit Hilfe eines Werkzeugwechslers 66 erfolgen, der mit einem Deckelhalter 68 bestückt ist (Fig. 4c und 4d). Der Vorgang des Aufsetzens und Abnehmens des Deckels 64 kann somit automatisiert werden.

Das Statorteil 18 und das Rotorteil 26 weisen jeweils eine im Querschnitt U-förmige Kernpartie 72,74 sowie je eine auf die statorseitige und die rotorseitige Kernpartie aufgewickelte Energiewicklung 76,78 für die Energieübertragung nach dem Transformatorprinzip auf. Außerdem sind je zwei einander paarweise zugeordnete stator- und rotorseitige Kopplungswindungen 80',80",82', 82" vorgesehen, die an die Sende und/oder Empfangselektronik in dem betreffenden Bauteil angeschlossen sind. Im montierten Zustand sind die Kernpartien 72,74 mit ihren freien Schenkeln 72',72",74',74" einander unmittelbar zugewandt und durch den Luftspalt 35 voneinander getrennt. Die Energiewicklungen 76,78 greifen in den Wickelraum 84,86 zwischen den beiden Kernschenkeln und dem Joch 72"',74"' ein und sind im Bereich des Wickelfensters 84',86' durch den Luftspalt 35 voneinander getrennt. Eine Besonderheit der Erfindung besteht darin, dass sich die Kopplungswindungen 80',80" im Statorteil 18 und die Kopplungswindungen 82',82" im Rotorteil 26 auf der Außenseite je eines der beiden Kernschenkel befinden. Die statorseitigen Kopplungswindungen 80',80" weisen dabei einen rotornahen Windungszweig 88' und einen rotorfernen Windungszweig 88" auf, die über Umlenkschleifen 88"' miteinander verbunden sind. An ihren rotorfernen Windungszweigen 88" sind die statorseitigen Kopplungswindungen 80',80" durch Öffnungen 90', 90" durch das Statorgehäuse 34 nach außen geführt. Die Energiewicklung 76 ist über eine weitere Öffnung 90'" durch das Statorgehäuse 34 nach außen geführt.

Die rotorseitige Energiewicklung 78 liegt im Wickelraum 86 der rotorseitigen Kernpartie 74 unmittelbar der statorseitigen Energiewicklung 76 gegenüber. Die rotorseitigen Kopplungswindungen 82',82" liegen mit ihrem statornahen Windungszweig 89' dem rotornahen Windungszweig 88' der korrespondierenden statorseitigen Kopplungswindungen 80', 80" unmittelbar gegenüber. Die Kopplungswindungen spannen auf der Statorseite eine teilzylindrische und auf der Rotorseite jeweils eine vollzylindrische Fläche auf. Sie sind zweckmäßig auf einem flexiblen Flachmaterialträger in Form von Leiterbahnen aufgedruckt. Die Flachmaterialträger umfassen zweckmäßig einen auf Massepotential liegenden Leiterbereich, der von den Kopplungswindungen 80',80",82',82" umschlossen ist. Die auf den Außenseiten der Kemschenkel 72',72",74',74" angeordneten Kopplungswindungen sind gegenüber dem Feld der Energiewicklungen 76,78 durch die Kemschenkel abgeschirmt, so dass die Gefahr von induzierten Störsignalen weitgehend eliminiert ist. Hinzu kommt, dass die Kopplungswindungen in ihrem Spaltraum zwischen den Kernschenkeln 72',72",74',74" und dem zugehörigen Gehäuse 34,70 gegen die Einwirkung abrassiver Teilchenströme geschützt sind. Eine weitere Verbesserung in dieser Hinsicht wird dadurch erzielt, dass die Kopplungswindungen und die Energiewicklung in eine geeignete Gussmasse eingebettet sind.

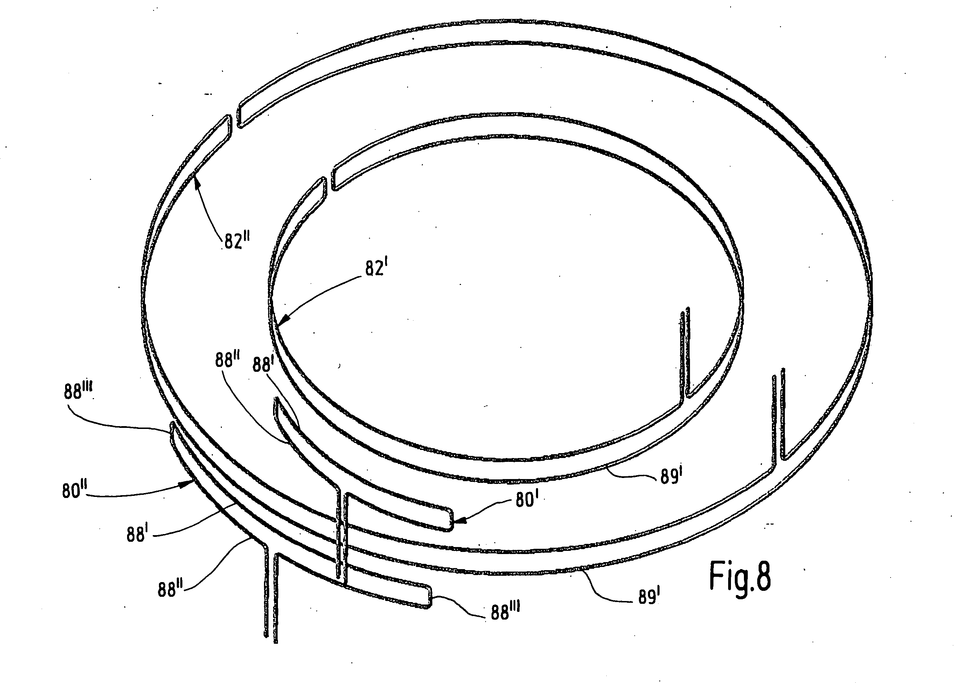

Der Aufbau der Datenübertragungsstrecken innerhalb des Drehübertragers ist besonders gut in Fig. 8 zu erkennen. Dort ist erkennbar, dass sich die Kopplungswindungen 80',80",82',82" paarweise mit den einander zugewandten Windungszweigen 88',89' gegenüberliegen und dass die statorseitigen Kopplungswindungen 80',80" eine teilzylindrische Fläche und die rotorseitigen Kopplungswindungen 82',82" eine vollzylindrische Fläche aufspannen.

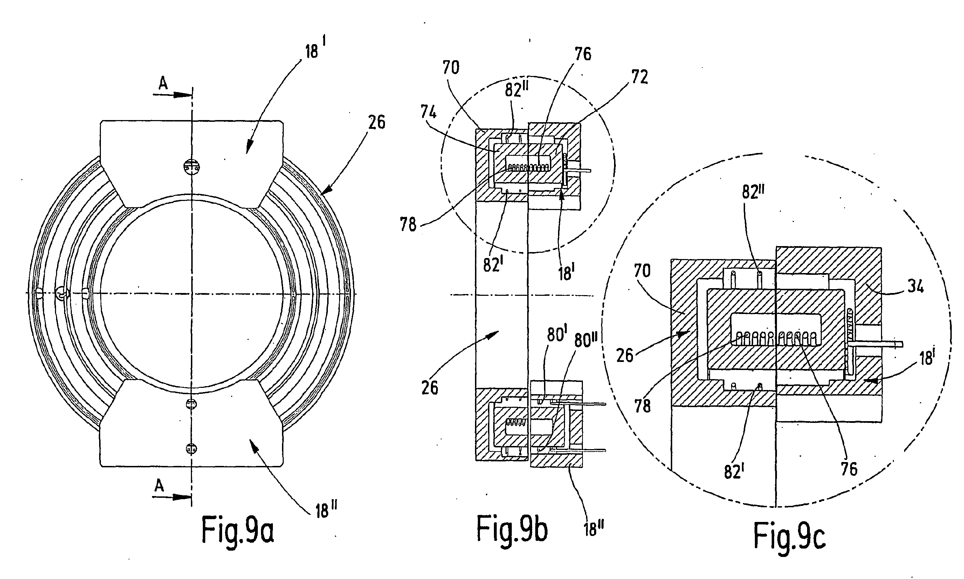

Bei dem in Fig. 9a bis 9c gezeigten Ausführungsbeispiel sind zwei segmentartige Statorteile 18',18" vorgesehen, die einander diametral gegenüberliegen und von denen das eine (18') zur Aufnahme der Energiewicklung 76 und das andere (18") zur Aufnahme der Kopplungswindungen 80',80" für die Datenübertragung bestimmt ist. Das Rotorteil 26 ist in diesem Fall vollzylindrisch ausgebildet und enthält sowohl eine Energiewicklung 78 als auch zwei Kopplungswicklungen 82',82" wie im Falle der zuvor beschriebenen Ausführungsbeispiele.

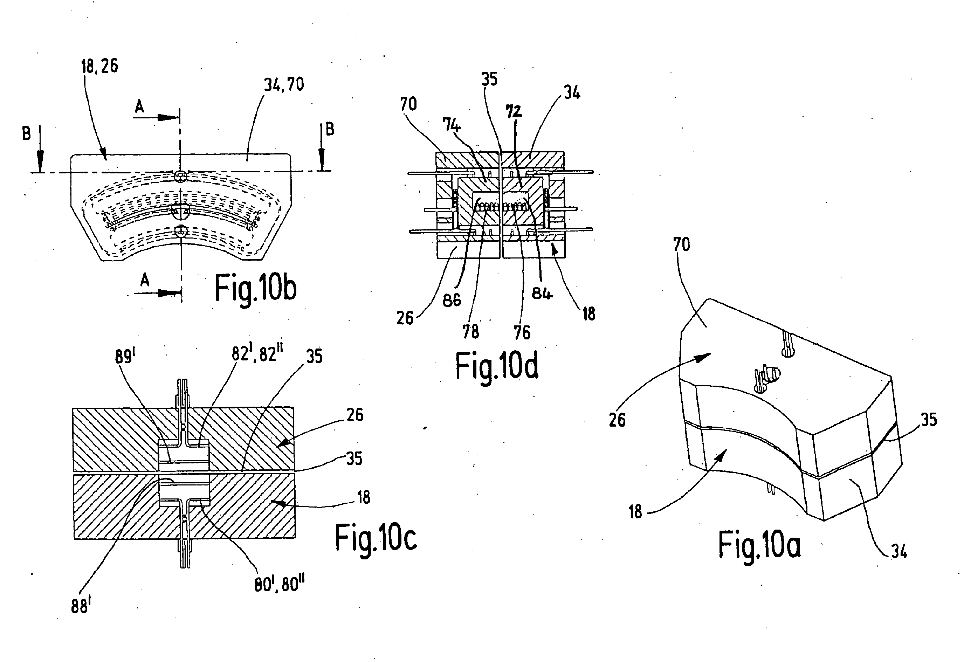

Bei dem in Fig. 10a bis 10d gezeigten Ausführungsbeispiel sind sowohl das Statorteil 18 mit dem Statorgehäuse 34 als auch das Rotorteil 26 mit seinem Gehäuse 70 segmentartig ausgebildet. Im Betriebszustand sind das Statorteil 18 und das Rotorteil 26 spiegelsymmetrisch zueinander angeordnet und an ihrer Trennfläche durch einen Luftspalt 35 voneinander getrennt. Beide Gehäuse 34,70 enthalten je eine im Querschnitt U-förmige Kernpartie 72,74 mit in den Wicklungsräumen 84,86 angeordneten Energiewicklungen 76,78 sowie außerhalb der Kernschenkel angeordneten Kopplungswindungen 80',80" bzw. 82',82". Die Kopplungswindungen spannen jeweils eine teilzylindrische Fläche auf.

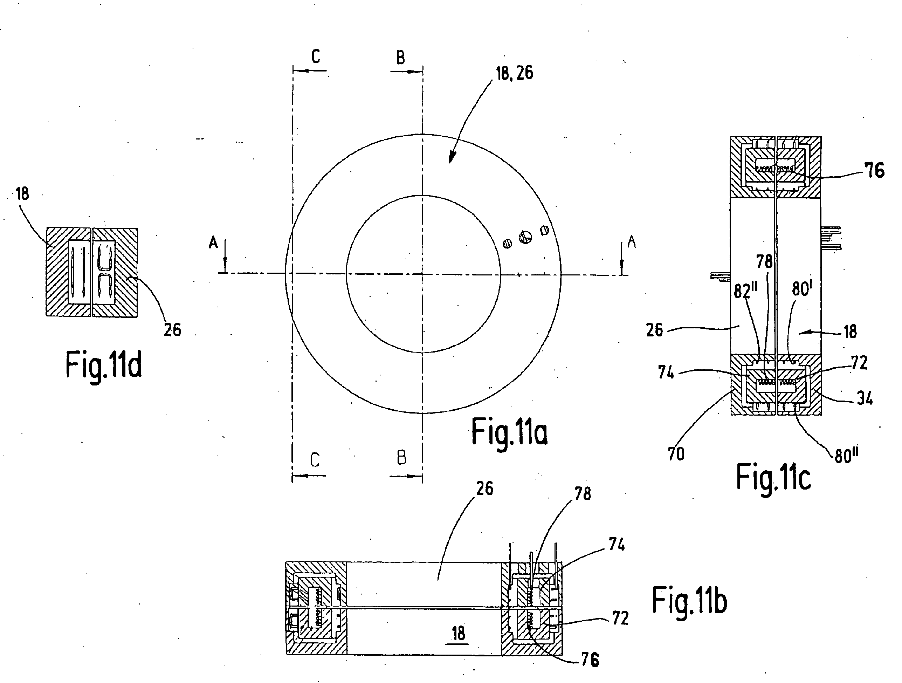

Bei dem in Fig. 11a bis 11d gezeigten Ausführungsbeispiel sind sowohl das Statorteil 18 als auch das Rotorteil 26 vollzylindrisch ausgebildet. Dementsprechend sind die im Statorgehäuse 34 und im Rotorgehäuse 70 angeordneten Kernpartien 72,74 sowie die darin befindlichen Energiewicklungen 76,78 und Kopplungswindungen 80',80",82',82" jeweils vollzylindrisch umlaufend ausgebildet. Eine Anordnung dieser Art wird vor allem bei Drehübertragern mit einander gegenüberliegenden rotierenden Teilen verwendet, die nicht auswechselbar sein müssen.

Im Rahmen der Erfindung ist es als gleichwirkend anzusehen, wenn statt der teil- oder vollzylindrisch ausgebildeten Stator- und Rotorteile mit den zugehörigen Kernpartien, Energiewicklungen und Kopplungsanordnungen solche in teil- oder vollkegeliger Bauart verwendet werden.

Zusammenfassend ist folgendes festzuhalten: Die Erfindung bezieht sich auf einen Drehübertrager beispielsweise für den Einsatz in Werkzeugmaschinen mit Verstellwerkzeugen. Der Drehübertrager umfasst einen Statorteil 18 und einen Rotorteil 26 mit je einer statorseitigen und einer rotorseitigen, an einer der zugewandten Enden über einen Luftspalt voneinander getrennten Kernpartie 72,74, mit je mindestens einer auf die statorseitige und die rotorseitige Kernpartie aufgewickelten Energiewicklung 76,78 für die Energieübertragung nach dem Transformatorprinzip, und mit einander paarweise zugeordneten, stator- und rotorseitigen Kopplungswindungen 80',80",82',82" für die induktive Datenübertragung. Ziel der Erfindung ist eine weitgehend störungsfreie Datenübertragung. Ein weiteres Ziel ist ein geringer Wartungsaufwand. Um dies zu erreichen, wird gemäß der Erfindung primär vorgeschlagen, dass die Kopplungswindungen 80',80",82',82" durch Teile der jeweiligen Kernpartien 72,74 vom Bereich der Energiewicklungen 76,78 getrennt und von diesen abgeschirmt sind und unter Bildung je einer räumlich gekrümmten Schleife im zugehörigen Stator- und Rotorteil 18,26 angeordnet sind.

## Patentansprüche

1. Drehübertrager mit einem Statorteil (18) und einem Rotorteil (26), mit je einer statorseitigen und einer rotorseitigen, an einander zugewandten Enden über einen Luftspalt (35) voneinander getrennten Kernpartie (72,74), mit je mindestens einer auf die statorseitige und die rotorseitige Kernpartie aufgewickelten Energiewicklung (76,78) für die Energieübertragung nach dem Transformatorprinzip, und mit einander paarweise zugeordneten, stator- und rotorseitigen Kopplungswindungen (80',80", 82',82") für die induktive Datenübertragung, die an eine Sende- und/oder Empfangselektronik angeschlossen sind, wobei die Kopplungswindungen (80',80",82',82") durch Teile der jeweiligen Kernpartie (72,74) vom Bereich der Energiewicklung (76,78) getrennt und von diesen abgeschirmt sind, **dadurch gekennzeichnet, dass** die Kopplungswindungen unter Bildung je einer räumlich gekrümmten Schleife im zugehörigen Stator- und Rotorteil angeordnet sind, dass die statorseitige Kopplungswindung (80',80") einen rotomahen und mindestens einen rotorfernen Windungszweig (88',88") aufweist, die über mindestens eine Umlenkschleife (88"') miteinander verbunden sind, dass die rotorseitige Kopplungswindung (82',82") einen statomahen Windungszweig (89') und mindestens einen statorfernem Windungszweig aufweist, die über mindestens eine Umlenkschleife miteinander verbunden sind, dass die Windungszweige (88',88") der statorseitgen Kopplungswindung (80',80") zusammen mit der zugehörigen Umlenkschleife (88"') eine teilzylindrische Fläche aufspannen, dass die Windungszweige der rotorseitigen Kopplungswindung (82',82") zusammen mit der zugehörigen Umlenkschleife eine zylindrische Fläche aufspannen, dass die teilzylindrische Fläche der statorseitigen Kopplungswindung (80',80") und die zylindrische Fläche der zugehörigen rotorseitigen Kopplungswindung (82',82") mit etwa gleichen Zylinderradien koaxial zur Rotationsachse (12) des Rotorteils (28) in axialem Abstand voneinander angeordnet sind, und dass der statomahe Windungszweig (89') der rotorseitigen Kopplungswindung (82',82") und der rotomahe Windungszweig (88') der statorseitigen Kopplungswindung (80',80") mit etwa gleicher Umfangskrümmung parallel zueinander und in axialem Abstand voneinander angeordnet sind

2. Drehübertrager nach Anspruch 1, **dadurch gekennzeichnet, dass** die Umlenkschleifen (88"') im Wesentlichen achsparallel zu den zylindrischen oder teilzylindrischen Flächen angeordnet sind.

3. Drehübertrager nach Anspruch 1 oder 2, **dadurch gekennzeichnet, dass** das Statorteil (18) mit seiner Kernpartie (72), der Energiewicklung (76) und der mindestens einen Kopplungswindung (80',80") sich über ein Zylindersegment erstreckt.

4. Drehübertrager nach einem der Ansprüche 1 bis 3, **dadurch gekennzeichnet, dass** das Rotorteil (26) mit seiner Kernpartie (74), der Energiewicklung (78) und der mindestens einen Kopplungswindung (82',82") sich über einen Vollzylinder erstreckt.

5. Drehübertrager nach einem der Ansprüche 1 bis 4, **dadurch gekennzeichnet, dass** die Kernpartie (74) des Rotorteils (26) zwei in radialem Abstand voneinander zylindrisch umlaufende, einseitig durch ein radiales Joch (74"') unter Bildung eines statorseitig offenen U-förmigen Querschnitts miteinander verbundene Kernschenkel (74',74") aufweist, dass die rotorseitige Energiewicklung (78) im zylindrischen Zwischenbereich (86) zwischen den Kernschenkeln (74',74") umläuft und dass die mindestens eine rotorseitige Kopplungswindung (82',82") radial außerhalb des inneren und/oder äußeren Kernschenkels (74',74") umläuft.

6. Drehübertrager nach einem der Ansprüche 1 bis 5, **dadurch gekennzeichnet, dass** die Kernpartie (72) des Statorteils (18) zwei in radialem Abstand teilzylindrisch verlaufende, einseitig durch ein radiales Joch (72"') unter Bildung eines rotorseitig offenen U-förmigen Querschnitts miteinander verbundene Kemschenkel (72',72") aufweist, dass die rotorseitige Energiewicklung (76) im teilzylindrischen Zwischenbereich (84) zwischen den Kernschenkeln (72',72") angeordnet ist und dass die mindestens eine statorseitige Kopplungswindung (80',80") radial außerhalb des inneren und/oder äußeren statorseitigen Kernschenkels (72',72") angeordnet ist.

7. Drehübertrager nach einem der Ansprüche 1 bis 6, **dadurch gekennzeichnet, dass** die statorseitigen und die rotorseitigen Anschlusskontakte der Energiewicklungen (76,78) und/oder der Kopplungswindungen (80',80",82',82") jeweils auf der Jochseite nach außen geführt sind.

8. Drehübertrager nach einem der Ansprüche 1 bis 7, **dadurch gekennzeichnet, dass** die ferromagnetischen Kernpartien (72,74) aus einem ferritischen Material bestehen.

9. Drehübertrager nach einem der Ansprüche 1 bis 8, **dadurch gekennzeichnet, dass** zumindest die rotomahen Windungszweige (88') der statorseitigen Kopplungswindungen (80',80") und/oder der Energiewicklungen (76) eine dielektrische Deckschicht tragen.

10. Drehübertrager nach Anspruch 9, **dadurch gekennzeichnet, dass** die Deckschicht mit einer Kennfarbe eingefärbt ist.

11. Drehübertrager nach Anspruch 10, **dadurch gekennzeichnet, dass** die Deckschicht eine Wandstärke < 1 mm, vorzugsweise < 0,5 mm aufweist.

12. Drehübertrager nach einem der Ansprüche 9 bis 11, **dadurch gekennzeichnet, dass** die Deckschicht aus einem Isolatormaterial besteht und dass eine Vorrichtung zur Überwachung der elektrischen Leitfähigkeit der Deckschicht vorgesehen ist.

13. Drehübertrager nach einem der Ansprüche 1 bis 12, **dadurch gekennzeichnet, dass** die mindestens eine Kopplungswindung (80',80",82', 82") als auf einen Flachmaterialträger aufgedruckte, vorzugsweise biegsame Leiterbahn ausgebildet ist.

14. Drehübertrager nach Anspruch 13, **dadurch gekennzeichnet, dass** der Flachmaterialträger gegen eine der Energiewicklung abgewandte, achsparallel ausgerichtete Außenfläche eines der Kernschenkel (72',72",74',74") anliegt oder auf diesen aufgeklebt ist.

15. Drehübertrager nach Anspruch 13 oder 14, **dadurch gekennzeichnet, dass** der Flachmaterialträger zusätzlich einen auf Massepotential liegenden, von der Kopplungswindung (80',80",82',82") umschlossenen Leiterbereich aufweist.

16. Drehübertrager nach einem der Ansprüche 1 bis 15, **dadurch gekennzeichnet, dass** die mindestens eine Kopplungswindung (80',80",82', 82") und/oder die Energiewicklung (76,78) in einer zugleich die Deckschicht bildenden Gießmasse eingebettet ist/sind.

17. Drehübertrager nach Anspruch 16, **dadurch gekennzeichnet, dass** die Gießmasse und/oder die Deckschicht ein abriebfestes Material enthält.

18. Drehübertrager nach Anspruch 17, **dadurch gekennzeichnet, dass** die Gießmasse aus einem mit Keramikteilchen gemischten Kunststoffmaterial besteht.

19. Drehübertrager nach einem der Ansprüche 1 bis 18, **dadurch gekennzeichnet, dass** das Statorteil (18) in einem Gehäuse (34) angeordnet ist, das aus einem Grundgehäuse (34') zur Aufnahme von eine Sende- und/oder Empfangselektronik mit Anschlusskabel sowie einem am Grundgehäuse (34') lösbar angeordneten Wechselgehäuse (34") zur Aufnahme der Energiewicklung (76) und der mindestens einen Kopplungswindung (80',80") zusammengesetzt ist, und dass zwischen dem Grundgehäuse (34') und dem Wechselgehäuse (34") lösbare Steckkontakte (62) zur Herstellung von elektrischen Verbindungen angeordnet sind.

20. Drehübertrager nach einem der Ansprüche 1 bis 19, **dadurch gekennzeichnet, dass** das Statorteil (18) in einem Gehäuse (34) angeordnet ist, das im Bereich der Energiewicklung (76) und der Kopplungswindungen (80',80") zur Rotorseite hin unter Bildung eines Gehäusefensters (60) offen ist und dass das Gehäusefenster (60) mit einem Deckel (64) dicht verschließbar ist, der vorzugsweise über ein Handhabungssystem (66) am Gehäuse (34) platzierbar und fixierbar ist.

21. Drehübertrager nach Anspruch 1, **dadurch gekennzeichnet, dass** die Windungszweige der statorseitige und der rotorseitigen Kopplungswindungen (80',80",82',82") zusammen mit den zugehörigen Umkehrschleifen zueinander spiegelsymmetrisch angeordnete, teilzylindrische Flächen aufspannen.

22. Drehübertrager nach Anspruch 1, **dadurch gekennzeichnet, dass** die Windungszweige der statorseitigen und der rotorseitigen Kopplungswindungen (80',80",82',82") zusammen mit den zugehörigen Umlenkschleifen zueinander spiegelsymmetrisch angeordnete vollzylindrische Flächen aufspannen.

23. Werkzeugmaschine mit einem Maschinengestell (24), einer motorisch antreibbaren Maschinenspindel (22), einem an der Maschinenspindel lösbar angeordneten Werkzeugkopf (10) und einem Drehübertrager nach einem der Ansprüche 1 - 22, wobei das Maschinengestell (24) in Spindelnähe das Statorteil (18) und der Werkzeugkopf (10) das Rotorteil (26) des Drehübertragers trägt und die rotorseitige Oberfläche des Statorteils (18) von einem spanabweisenden Fluid-Strom beaufschlagt ist.

24. Werkzeugmaschine mit einem Maschinengestell (24), einer motorisch antreibbaren Maschinenspindel (22), einem an der Maschinenspindel lösbar angeordneten Werkzeugkopf (10) und einem Drehübertrager nach einem der Ansprüche 1-22, wobei das Maschinengestell (24) in Spindelnähe das Statorteil (18) und der Werkzeugkopf (10) das Rotorteil (26) des Drehübertragers trägt und die Werkzeugmaschine eine Handhabungsvorrichtung (66) zum Montieren oder Abnehmen zumindest eines Teils des Statorteils (16) am/vom Maschinengestell (24) aufweist.

25. Werkzeugmaschine nach Anspruch 24 mit einem Werkzeugmagazin, **dadurch gekennzeichnet, dass** das Werkzeugmagazin zumindest einen Platz für die Aufnahme des vom Maschinengestell abgenommenen Teils des Statorteils aufweist.

## Claims

1. Rotary transmitter having a stator part (18) and a rotor part (26), each having a respective stator core part (72) and a rotor core part (74), which are separated from one another at mutually facing ends, and each having at least one respective power winding (76, 78), which is wound on the stator core part and the rotor core part, in order to transmit power using the transformer principle, and having respective stator and rotor coupling turns (80', 80", 82', 82"), which are associated with one another in pairs, for inductive data transmission, which are connected to transmitting and/or receiving electronics, in which the coupling turns (80', 80", 82', 82") are separated from the area of the power winding (76, 78) by portions of the corresponding core part, and are shielded from these, **characterized in that** the coupling turns are arranged in the associated stator part and rotor part, in each case forming a three-dimensionally curved loop, **in that** the stator coupling turn (80', 80") has a turn branch (88') close to the rotor and a turn branch (88") remote from the rotor, which are connected to one another via at least one direction-changing loop (88"'), **in that** the rotary coupling turn (82', 82") has a turn branch (89') close to the stator and at least one turn branch remote from the stator, which are connected to one another via at least one direction-changing loop, **in that** the turn branches (88', 88") of the stator coupling turn (80', 80"), together with the associated direction-changing loop (88"') cover a partially cylindrical area, **in that** the turn branches of the rotor coupling turn (82', 82") together with the associated direction-changing loop cover a cylindrical area, **in that** the partially cylindrical area of the stator coupling turn (80', 80") and the cylindrical area of the associated rotor coupling turn (82', 82") are arranged with approximately the same cylinder radii, at an axial distance from one another coaxially with respect to the rotation axis (12) of the rotor part (28) and **in that** the turn branch (89') of the rotor coupling turn (82', 82") which is close to the stator, and the turn branch (88') of the stator coupling turn (80', 80") which is close to the rotor are arranged with approximately the same circumferential curvature parallel to one another and at an axial distance from one another.

2. Rotary transmitter according to Claim 1,
**characterized in that** the direction-changing loops (88"') are arranged essentially parallel to the axis of the cylindrical or partially cylindrical areas.

3. Rotary transmitter according to Claim 1 or 2, **characterized in that** the stator part (18) with its core part (72), the power winding (76) and the at least one coupling turn (80', 80") extends over a cylindrical segment.

4. Rotary transmitter according to one of Claims 1 to 3, **characterized in that** the rotor part (26) with its core part (74), the power winding (78) and the at least one coupling turn (82', 82") extends over a full cylinder.

5. Rotary transmitter according to one of Claims 1 to 4, **characterized in that** the core part (74) of the rotor part (26) has two core limbs (74', 74") which revolve cylindrically at a radial distance from one another and are connected to one another at one end by a radial yoke (74''') forming a U-shaped cross section which is open on the stator side, **in that** the rotor power winding (78) revolves in the cylindrical area (86) between the core limbs (74', 74"), and **in that** the at least one rotor coupling turn (82', 82") revolves radially outside the inner and/or outer core limb (74', 74").

6. Rotary transmitter according to one of Claims 1 to 5, **characterized in that** the core part (72) of the stator part (18) has two core limbs (72', 72") which run in a partially cylindrical form at a radial distance from one another and are connected to one another at one end by a radial yoke (72"') forming a U-shaped cross section which is open on the rotor side, **in that** the rotor power winding (76) is arranged in the partially cylindrical area (84) between the core limbs (72', 72"), and **in that** the at least one stator coupling turn (80', 80") is arranged radially outside the inner and/or outer core limb (72', 72").

7. Rotary transmitter according to one of Claims 1 to 6, **characterized in that** the stator and the rotor connecting contacts of the power windings (76, 78) and/or of the coupling turns (80', 80", 82', 82") are each routed outwards on the yoke side.

8. Rotary transmitter according to one of Claims 1 to 7, **characterized in that** the ferromagnetic core parts (72, 74) are composed of ferritic material.

9. Rotary transmitter according to one of Claims 1 to 8, **characterized in that** at least the turn branches (88') of the stator coupling turns (80', 80") which are close to the rotor, and/or the power windings (76), are fitted with a dielectric covering layer.

10. Rotary transmitter according to Claim 9,
**characterized in that** the covering layer is colored with an identification color.

11. Rotary transmitter according to Claim 10,
**characterized in that** the covering layer has a wall thickness of less than 1 mm, preferably of less than 0.5 mm.

12. Rotary transmitter according to one of Claims 9 to 11, **characterized in that** the covering layer is composed of an insulator material and **in that** an apparatus is provided for monitoring the electrical conductivity of the covering layer.

13. Rotary transmitter according to one of Claims 1 to 12, **characterized in that** the at least one coupling turn (80', 80", 82', 82") is in the form of a preferably flexible conductor track printed on a flat material substrate.

14. Rotary transmitter according to Claim 13,
**characterized in that** the flat material substrate rests against an outer surface, which faces away from the power winding and is aligned parallel to the axis, of one of the core limbs (72', 72", 74', 74"), or is adhesively bonded to it.

15. Rotary transmitter according to Claim 13 or 14, **characterized in that** the flat material substrate additionally has a conductor area which is at ground potential and is surrounded by the coupling turn (80', 80", 82', 82").

16. Rotary transmitter according to one of Claims 1 to 15, **characterized in that** the at least one coupling turn (80', 80", 82', 82") and/or the power winding (76, 78) are/is embedded in a potting compound which at the same time forms the covering layer.

17. Rotary transmitter according to Claim 16,
**characterized in that** the potting compound and/or the covering layer contain/contains a wear-resistant material.

18. Rotary transmitter according to Claim 17,
**characterized in that** the potting compound is composed of a plastic material mixed with ceramic particles.

19. Rotary transmitter according to one of Claims 1 to 18, **characterized in that** the stator part (18) is arranged in a housing (34) which is composed of a basic housing (34') for holding transmitting and/or receiving electronics with a connecting cable as well as an interchangeable housing (34"), which is arranged detachably on the basic housing (34'), for holding the power winding (76) and the at least one coupling turn (80', 80"), and **in that** detachable plug contacts (62) are arranged between the basic housing (34') and the interchangeable housing (34") in order to produce electrical connections.

20. Rotary transmitter according to one of Claims 1 to 19, **characterized in that** the stator part (18) is arranged in a housing (34) which is open toward the rotor in the area of the power winding (76) and of the coupling turns (80', 80") forming a housing window (60), and **in that** the housing window (60) can be closed to form a seal by a cover (64) which can preferably be placed on and fixed to the housing (34) via a handling system (66).

21. Rotary transmitter according to Claim 1,
**characterized in that** the turn branches of the stator and rotor coupling turns (80', 80", 82', 82"), together with the associated direction-changing loops, cover partially cylindrical areas which are arranged with mirror-image symmetry with respect to one another.

22. Rotary transmitter according to Claim 1,
**characterized in that** the turn branches of the stator and rotor coupling turns (80', 80", 82', 82") together with the associated direction-changing loops, cover completely cylindrical areas which are arranged with mirror-image symmetry with respect to one another.

23. Machine tool having a machine frame (24), a machine spindle (22) which can be driven by a motor or motors, a tool head (10) which is arranged detachably on the machine spindle, and a rotary transmitter according to one of Claims 1 to 22, with the machine frame (24) being fitted in the vicinity of the spindle with the stator part (18) and with the tool head (10) being fitted with the rotor part (26) of the rotary transmitter and the rotor-side surface of the stator part (18) has a swarf-repelling fluid flow applied to it.

24. Machine tool having a machine frame (24), a machine spindle (22) which can be driven by a motor or motors, a tool head (10) which is arranged detachably on the machine spindle, and a rotary transmitter according to one of Claims 1 to 22, wherein the machine frame (24) is fitted in the vicinity of the spindle with the stator part (18) and the tool head (10) is fitted with the rotor part (26) of the rotary transmitter and wherein the machine tool has a handling apparatus (66) for mounting or removing at least a part of the stator part (16) on/from the machine frame (24).

25. Machine tool according to Claim 24, having a tool magazine, **characterized in that** the tool magazine has at least one space for holding the part of the stator part which has been removed from the machine frame.

## Revendications

1. Transmetteur rotatif avec une partie stator (18) et une partie rotor (26), avec des parties noyau (72, 74) respectivement côté stator et côté rotor, séparées l'une de l'autre par un entrefer (35) à des extrémités tournées l'une vers l'autre, avec chaque fois au moins un bobinage d'énergie (76, 78) enroulé sur les parties noyau côté stator et côté rotor pour la transmission d'énergie selon le principe du transformateur, et avec des enroulements de couplage (80', 80", 82', 82") côté stator et côté rotor associés par paires pour la transmission inductive de données, qui sont connectés à une électronique d'émission et/ou de réception, les enroulements de couplage (80', 80", 82', 82") étant séparés de la zone du bobinage d'énergie (76, 78) par des parties de la partie noyau (72, 74) respective et blindées par celles-ci, **caractérisé en ce que** les enroulements de couplage (80', 80", 82', 82") sont disposés dans la partie stator et rotor correspondante en formant chaque fois une boucle courbée dans l'espace, que l'enroulement de couplage côté stator (80', 80") présente des branches d'enroulement (88', 88") dont une est proche du rotor et au moins une éloignée du rotor, qui sont reliées ensemble par l'intermédiaire d'au moins une boucle de déviation (88"'), que l'enroulement de couplage côté rotor (82', 82") présente une branche d'enroulement proche du stator (89') et au moins une branche d'enroulement éloignée du stator, qui sont reliées ensemble par l'intermédiaire d'au moins une boucle de déviation, que les branches d'enroulement (88', 88") de l'enroulement de couplage côté stator (80', 80") définissent avec la boucle de déviation (88"') correspondante une surface partiellement cylindrique, que les branches d'enroulement de l'enroulement de couplage côté rotor (82', 82") définissent avec la boucle de déviation correspondante une surface cylindrique, que la surface partiellement cylindrique de l'enroulement de couplage côté stator (80', 80") et la surface cylindrique de l'enroulement de couplage côté rotor (82', 82") correspondant sont disposées avec approximativement les mêmes rayons de cylindre coaxialement à l'axe de rotation (12) de la partie rotor (28) à distance axiale l'une de l'autre, et que la branche d'enroulement proche du stator (89') de l'enroulement de couplage côté rotor (82', 82") et la branche d'enroulement proche du rotor (88') de l'enroulement de couplage côté stator (80', 80") sont disposées avec approximativement la même courbure périphérique parallèlement l'une à l'autre et à distance axiale l'une de l'autre.

2. Transmetteur rotatif selon la revendication 1, **caractérisé en ce que** les boucles de déviation (88"') sont disposées essentiellement parallèlement à l'axe des surfaces cylindriques ou partiellement cylindriques.

3. Transmetteur rotatif selon la revendication 1 ou 2, **caractérisé en ce que** la partie stator (18) avec sa partie noyau (72), le bobinage d'énergie (76) et ledit au moins un enroulement de couplage (80', 80") s'étend sur un segment de cylindre.

4. Transmetteur rotatif selon l'une des revendications 1 à 3, **caractérisé en ce que** la partie rotor (26) avec sa partie noyau (74), le bobinage d'énergie (78) et ledit au moins un enroulement de couplage (82', 82") s'étend sur un cylindre complet.

5. Transmetteur rotatif selon l'une des revendications 1 à 4, **caractérisé en ce que** la partie noyau (74) de la partie rotor (26) présente deux branches de noyau (74', 74") tournant cylindriquement à distance radiale l'une de l'autre, reliées ensemble d'un côté par une culasse radiale (74''') en formant une section en U ouverte côté stator, que le bobinage d'énergie côté rotor (78) tourne dans la zone intermédiaire cylindrique (86) entre les branches de noyau (74', 74") et que ledit au moins un enroulement de couplage côté rotor (82', 82") tourne radialement à l'extérieur de la branche de noyau intérieure et/ou extérieure (74', 74").

6. Transmetteur rotatif selon l'une des revendications 1 à 5, **caractérisé en ce que** la partie noyau (72) de la partie stator (18) présente deux branches de noyau (72', 72") s'étendant sur un cylindre partiel à distance radiale l'une de l'autre, reliées ensemble d'un côté par une culasse radiale (72"') en formant une section en U ouverte côté rotor, que le bobinage d'énergie côté rotor (76) est disposé dans la zone intermédiaire partiellement cylindrique (84) entre les branches de noyau (72', 72") et que ledit au moins un enroulement de couplage côté stator (80', 80") est disposé radialement à l'extérieur de la branche de noyau côté stator (72', 72") intérieure et/ou extérieure.

7. Transmetteur rotatif selon l'une des revendications 1 à 6 , **caractérisé en ce que** les contacts de connexion côté stator et côté rotor des bobinages d'énergie (76, 78) et/ou des enroulements de couplage (80', 80", 82', 82") sont chaque fois menés vers l'extérieur du côté de la culasse.

8. Transmetteur rotatif selon l'une des revendications 1 à 7, **caractérisé en ce que** les parties noyau (72, 74) ferromagnétiques sont composées d'un matériau ferritique.

9. Transmetteur rotatif selon l'une des revendications 1 à 8, **caractérisé en ce qu'**au moins les branches d'enroulement proches du rotor (88') des enroulements de couplage côté stator (80', 80") et/ou des bobinages d'énergie (76) portent une couche de recouvrement diélectrique.

10. Transmetteur rotatif selon la revendication 9, **caractérisé en ce que** la couche de recouvrement est teintée avec une couleur d'identification.

11. Transmetteur rotatif selon la revendication 10, **caractérisé en ce que** la couche de recouvrement présente une épaisseur de paroi < 1 mm, de préférence < 0,5 mm.

12. Transmetteur rotatif selon l'une des revendications 9 à 11, **caractérisé en ce que** la couche de recouvrement est composée d'un matériau isolant et qu'il est prévu un dispositif pour surveiller la conductivité électrique de la couche de recouvrement.

13. Transmetteur rotatif selon l'une des revendications 1 à 12, **caractérisé en ce que** ledit au moins un enroulement de couplage (80', 80", 82', 82") est réalisé sous la forme d'une piste conductrice, de préférence flexible, imprimée sur un support en matériau plat.

14. Transmetteur rotatif selon la revendication 13, **caractérisé en ce que** le support en matériau plat est appliqué contre une surface extérieure opposée au bobinage d'énergie, dirigée parallèlement à l'axe d'une des branches de noyau (72', 72", 74', 74"), ou collée sur celle-ci.

15. Transmetteur rotatif selon la revendication 13 ou 14, **caractérisé en ce que** le support en matériau plat présente en plus une zone conductrice mise au potentiel de la masse, entourée par l'enroulement de couplage (80', 80", 82', 82").

16. Transmetteur rotatif selon l'une des revendications 1 à 15, **caractérisé en ce que** ledit au moins un enroulement de couplage (80', 80", 82', 82") et/ou le bobinage d'énergie (76, 78) est/sont enrobé(s) dans une masse de coulage formant en même temps la couche de recouvrement.

17. Transmetteur rotatif selon la revendication 16, **caractérisé en ce que** la masse de coulage et/ou la couche de recouvrement contient/contiennent un matériau résistant à l'abrasion.

18. Transmetteur rotatif selon la revendication 17, **caractérisé en ce que** la masse de coulage est composée d'une matière plastique mélangée à des particules de céramique.

19. Transmetteur rotatif selon l'une des revendications 1 à 18, **caractérisé en ce que** la partie stator (18) est disposée dans un boîtier (34) qui est composé d'un boîtier de base (34') servant à recevoir une électronique d'émission et/ou de réception avec câble de connexion ainsi que d'un boîtier échangeable (34") disposé de manière détachable sur le boîtier de base (34') servant à recevoir le bobinage d'énergie (76) et ledit au moins un enroulement de couplage (80', 80"), et que des contacts enfichables (62) détachables pour établir des liaisons électriques sont disposés entre le boîtier de base (34') et le boîtier échangeable (34").

20. Transmetteur rotatif selon l'une des revendications 1 à 19, **caractérisé en ce que** la partie stator (18) est disposée dans un boîtier (34) qui, dans la zone du bobinage d'énergie (76) et des enroulements de couplage (80', 80"), est ouvert vers le côté rotor en formant une fenêtre de boîtier (60), et que la fenêtre de boîtier (60) peut être fermée de manière étanche par un couvercle (64) qui peut de préférence être placé et fixé sur le boîtier (34) au moyen d'un système de manipulation (66).

21. Transmetteur rotatif selon la revendication 1, **caractérisé en ce que** les branches d'enroulement des enroulements de couplage côté stator et côté rotor (80', 80", 82', 82") définissent avec les boucles de déviation correspondantes des surfaces partiellement cylindriques disposées symétriquement l'une par rapport à l'autre.

22. Transmetteur rotatif selon la revendication 1, **caractérisé en ce que** les branches d'enroulement des enroulements de couplage côté stator et côté rotor (80', 80", 82', 82") définissent avec les boucles de déviation correspondantes des surfaces entièrement cylindriques disposées symétriquement l'une par rapport à l'autre.

23. Machine-outil avec un bâti de machine (24), une broche de machine (22) pouvant être entraînée par un moteur, une tête porte-outil (10) disposée de manière détachable sur la broche de machine et un transmetteur rotatif selon l'une des revendications 1 à 22, le bâti de machine (24) portant à proximité de la broche la partie stator (18) et la tête porte-outil (10) la partie rotor (26) du transmetteur rotatif et la surface côté rotor de la partie stator (18) étant exposée à un courant de fluide repoussant les copeaux.

24. Machine-outil avec un bâti de machine (24), une broche de machine (22) pouvant être entraînée par un moteur, une tête porte-outil (10) disposée de manière détachable sur la broche de machine et un transmetteur rotatif selon l'une des revendications 1 à 22, le bâti de machine (24) portant à proximité de la broche la partie stator (18) et la tête porte-outil (10) la partie rotor (26) du transmetteur rotatif et la machine-outil présentant un dispositif de manipulation (66) pour monter au moins une partie de la partie stator (16) sur le bâti de machine (24) ou la démonter de celui-ci.

25. Machine-outil selon la revendication 24 avec un magasin d'outils, **caractérisée en ce que** le magasin d'outils présente au moins un emplacement pour la réception de la partie de la partie stator démontée du bâti de machine.
